# EUROPEAN PATENT APPLICATION

(11) **EP 1 363 214 A1**
(43) Date of publication of application: **19.11.2003**
(21) Application number: 02701573.4
(22) Date of filing: 22.02.2002
(51) Int. Cl.: G06F 17/60

(54) **CONTENTS CIRCULATING CHARGING AND DISTRIBUTING SYSTEM, METHOD, DEVICE AND PROGRAM, AND PROGRAM RECORDED MEDIUM**

(30) Priority: 22.02.2001 JP 2001046361
(71) Applicant: Sony Corporation, Tokyo 141-0001 (JP)
(72) Inventor: OTSUKA, Masaya, c/o SONY CORPORATION, Tokyo 141-0001 (JP); HARADA, Tadanori, c/o SONY CORPORATION, Tokyo 141-0001 (JP)
(74) Representative: Smith, Samuel Leonard
(86) International application number: JP0201589
(87) International publication number: WO02067168

(57) **Abstract**

By receiving delivery information of the contents, the earning by the delivery charge are recognized (S311). The license holder of the distributing earning right and the distribution rate for the contents receiving earning are recognized (S313), distribution earning for the license holder relative to the earning is calculated (S315), a trading is executed with a bank terminal having a bank account for the license holder, and distribution earning are deposited (S317, S319).

## Description

### BACKGROUNG OF THE INVENTION

### TECHNICAL FIELD

This invention relates to a contents circulation charge distribution system, a contents circulation charge distribution method, a contents circulation charge distribution apparatus, a contents circulation charge distribution program, and a recording medium recorded therein such contents circulation charge distribution program, which are effective to apply in an electronic trading of the contents circulating on a network.

### BACKGROUND ART

Conventionally, the trading of music data or image data has been conducted by recording them into a package (corporeal object) such as a CD (Compact Disk). But by virtue of progress in the technology, it has become possible to rapidly and cheaply make a copy of the same quality with the original. For this reason, in a DAT (Digital Audio Tape) media that has a function to copy digital data of a CD, for example, a SCMS (Serial Copy Management System) system is adopted to coop with an opposition from a license holder. Further in an MD (Mini Disc) or a DCC (Digital Compact Cassette) introduced after the DAT, a levy system has been further introduced to its recording medium in addition to the employment of the SCMS system that enables digital copy only once.

But the trading by package requires infrastructures for production and circulation of media such as CD or the like and a know-how or the like are necessary, so that the circulation of data by a creator of a minor label, a minor house-ware, Indies or the like is difficult, and accordingly options of the data for a user to utilize tends to be narrower.

By the way, in recent years, a circulation by delivery of contents such as music data or image data has become popular by down-loading from a server utilizing a network such as represented by the Internet. In such a system for contents delivery, charging is applied to the down-loading of the contents.

The delivery of the contents through the network such as the Internet is possible without investment or know-how required in the conventional circulation of the package, and a creator of not only a major label but also a minor label or Indies can easily participate. And options of selection of the contents become wider for a user, and it has a merit to easily obtain actually desirable contents.

The service for the digital data such as the delivery of contents utilizing the network is thought to cause a radical change in the conventional circulation mode different from the conventional one where the trading is done by the package.

For example, the contents obtained through a network have possibility to be copied as digital data at situation where an approach by the SCMS system or the like does not reach. Actually, there is a problem of increasing unfair use such as illegal copies at a cyber space.

For this reason, environmental considerations under the license condition represented by a CSS (Content Scrambling System) in a DVD has been conducted.

Further in the contents delivery utilizing the network, so-called super-circulation is proposed, wherein the digital data is not (owned) but an usage-log is managed at each usage, and the charge depending on the usage is collected by retrieving the usage-log and then distributed in order to realize a smooth circulation of digital data.

But in a simple electronic delivery system where a user who conducted down-loading of the contents is charged or in such super-circulation system where a user utilizing the contents is charged, it takes time to get earning by the delivery of the contents since a contents provider (author or creator) creates and up-loads the created contents. Further even the contents are up-loaded to the server, the earning cannot be obtained without delivery, so that risk of the contents provider is relatively large but not so large like the package. As described above, there is a problem where the load of the contents provider is still large even in the contents delivery system utilizing the network and in the super-circulation system.

Accordingly in the contents delivery utilizing the network, a proper circulation is secured with small load and risk, so that such system is desired that is easy to circulate the contents and is easy to realize a business model effectively exploited by a creator of a small entity like a minor label or the like.

### DISCLOSURE OF THE INVENTION

Accordingly, an object of the present invention is to provide a contents circulation charge distribution system capable of securing a circulation for various contents with small load and risk of a contents provider, a contents circulation charge distribution method, a contents circulation charge distribution apparatus, a contents circulation charge distribution program and a recording medium to which the contents circulation charge distribution program is recorded.

In order to attain the above-mentioned object, this invention provides a contents circulation charge distribution system that comprises a contents server for delivering contents, a contents client for receiving the delivery of the contents from the contents server, and a contents circulation charge distribution apparatus, wherein the above-mentioned contents circulation charge distribution apparatus recognizes the delivery of the contents from the contents server to the contents client, recognizes earning by the recognized delivery, recognizes the license holder and distribution rate of the distributing earning right preset to the contents the earning of which is recognized, and calculates distributing earning to be distributed to each of above-mentioned license holder from the above-mentioned earning based on the recognized license holder and the distribution rate.

Further this invention provides a contents circulation charge distribution method wherein, it recognizes the earning based on the contents delivered to a contents client from a contents server connected on the network, recognizes the earning by the recognized delivery, recognizes the license holder and the distribution rate of the distributing earning right preset to the contents the earning of which is recognized, and calculates the distributing earning among the earning to be distributed to each of afore-mentioned license holder based on the recognized license holder and the distribution rate.

Here, the "earning by delivery" means the earning obtained when the contents are delivered. As the earning by the delivery of the contents, a royalty paid by a user who is charged by delivery of the pay contents is included. The delivery of contents includes both cases when the contents are downloaded, for repeating use, to memory means such as a hard disk from a contents server that stores the contents and when the contents are temporarily utilized by accessing to the contents server. The earning by contents delivery includes the advertisement rate that is paid when the advertisement is delivered by the sponsor based on the number of delivery. With regard to the contents to be delivered together with the advertisement, it is, of course, needless to say that whether the contents delivered together with the advertisement are pay one or free one is not make any distinction.

The distributing earning right is a right to receive distribution of the earning obtained based on the delivery of contents. Essentially, the earning by the contents is the author or producer of the contents who has a copyright for the contents. In the present invention, the right, which is a part of the copyright, to receive the earning obtained by the delivery of the contents is proposed to sell as a distributing earning right.

Further, the "distribution rate" in the distributing earning right is only to be a numerical value from which the rate of the distributed earning distributed to a license holder having its distribution earning right relative to the whole earning is able to be recognized, and is not necessary to be a percentage ( % ) or a ratio relative to the whole earning. For example, when the distribution value indicating the mutual rate of the distributing earning obtained by each distribution earning right is preset to each distribution earning right, the distributed earning obtained by one distribution earning right becomes the rate of distribution value of each distribution earning right occupying the sum of the distribution value of each distribution earning right of the same contents. And, this distribution value can recognize a rate of the obtained distributed earning when the other distribution value of the same contents is known, so that this corresponds to the "distribution rate" of the present invention.

In the present invention, the system means an object that is arranged by logically assembling a plurality of apparatuses. In the system, it is not any distinction that each configuration of the apparatuses is installed in the same case. Further, if they are not installed in the same case, each apparatus in a different case may be connected to each other either by interfacing of each apparatus directly or by being wired or wireless form through the network with the other apparatus/means provided in each case wherein the apparatus is installed.

Further, the contents circulation charge distribution system may comprises by including a contents server for storing the contents to be delivered and a contents client for receiving the contents delivery. Other than this, it may include various terminals other than the contents circulation charge distribution apparatus and the network. For example, a trading server or the like which executes the trading such as collection of royalty from a user of the pay contents, collection of advertisement rate from a sponsor of the advertisement to be delivered together with the contents, and distribution of earning to the license holder who has the distributing earning right.

In the contents circulation charge distribution system of the present invention and the contents circulation charge distribution method of the present invention, when the contents are delivered from the contents server to the contents client, this information is outputted. This information is outputted from the contents client that receives the contents or the contents server.

In this case, the output of this information may be executed at every delivery or regularly such as at every predetermined time interval. Further, it may be irregular such as at every time when a predetermined number of delivery of contents are executed. In addition, it may be returned upon a request of the information other than it is outputted automatically from the contents server or the contents client. In this case, if there is no contents delivery, this information is transmitted. The information to be outputted is necessary to be information that can specify the delivered contents, when it is executed at every delivery. But if it is not at every delivery, it is necessary to be able to recognize the delivered contents and the number.

And the earning by the delivery of the contents is recognized upon receiving the information of existence of the delivery of the contents, the license holder and the its distribution rate of the distributing earning right of the contents are recognized, and then the distributing earning for each license holder is calculated.

The calculated earning for each license holder is printed out respectively or with accumulation for a predetermined time interval, outputted for use in another processing and transmitted to the other apparatus. As a case where it is outputted for use in another processing, the output for collecting, for each license holder, the plurality of distributed earning generated during the predetermined time interval about the license holder who has the distributing earning right of the plurality of contents or the like is able to be included. Further, as the other apparatus to be transmitted the result of the calculation, the terminal for a manager who manages the distributing earning right for each license holder and terminals for each license holder are able to be included. Other than this, the trading terminal for managing the account for each license holder or the like is able to be included.

According to the contents circulation charge distribution system and the contents circulation charge distribution method of the present invention, following business models are realized.

Namely, an investor purchases the right to receive the distribution of the earning (distributing earning right) by the delivery of the contents about the contents created by the contents provider. The contents provider obtains the purchase money at this time. The rate for receiving the distribution (distribution rate) is preset to the distributing earning right.

The contents are stored in the contents server and presented for delivery. It is possible to put the advertisement on these contents and to deliver the advertisement together with the contents.

When the contents are delivered, the contents user who receives the delivery pays the royalty. Further, the sponsor of the advertisement pays the advertisement rate at every delivery of the contents or based on the number of delivery of the contents.

And this royalty and the advertisement rate become the earning base on the contents. This earning based on the contents is distributed to the investor as distributed earning depending on the distribution rate. In the above-mentioned business models realized by the contents circulation charge distribution system and the contents circulation charge distribution method, the earning is given to the contents provider without waiting the delivery of the contents by that the investor purchases the distributing earning right, and thereby the load of the contents provider is reduced. Further this earning is possible to obtain earning regardless of actual number of delivery of the contents. Accordingly, it is possible to propose a chance for creation while reducing the load of the creator and the author about the contents of the creator or the author in a minor label, a minor software house, a minor studio or the like, and propose various contents to a user.

Further, the license holder having a right to receive the earning is able to receive the distributed earning based on the earning of the contents similar to a conventional investment like security. The distributing earning right is preset to a plurality for one contents as the distribution rate is preset. When the plurality is preset, then it become possible to purchase with small load, because the rights to receive the earning by the contents are to be purchased by a plurality of license holders. Further if distributing earning rights for various distribution rate are preset, the investor is able to purchase the distributing earning right having the distribution rate that is matching with their financial conditions. Further it is possible to trade the distribution earning right of the contents and get earning from this.

Further in this business model, activity of contents business becomes more active by the appearance of the new trading goods that is called as the distributing earning right of the contents. Further many people experience so-called position of an investor as a license holder of the distributing earning right of the contents to be delivered, the position of the contents provider side is understood, a moral for the copyright is established, and illegal copy can easily be avoided.

In this case, the sale of the distributing earning right of the contents is able to be done by a contents provider, but when actually realizing this business model, an agent is assigned, the contents to which distributing earning right is wanted to preset are recruited from contents delivery member, then the license holder is recruited, and then the distributing earning right and the distribution rate are preset. In this case, the agent may receive the royalty regarding the trading of the earning right from the contents provider or the license holder, or may receive a predetermined distribution rate or distributing amount as a agent fee among the earning by the delivery of the contents. Further, this agent may trade the distributing earning right that is previously preset.

Further, it may prepare a manager for distributing the earning by the delivery of the contents to each license holder. This manager may be done by the above-mentioned agent. The manager may receive the managing fee from the contents provider and the license holder, and further may receive a predetermined distribution rate or the distributing amount in advance among the earning by the delivery of the contents. This manager can execute the above-mentioned management using the contents circulation charge distribution apparatus.

This invention provide a contents circulation charge distribution apparatus which comprises earning recognizing means for recognizing earning based on the contents to be delivered, distributing license holder recognizing means for recognizing the license holder and its distribution rate of the distributing earning right preset to the contents the earning of which is recognized by the above-mentioned earning recognizing means, and distributing earning calculating means for calculating distributing earning to be distributed to the license holder who is recognized by the above-mentioned license holder recognizing means about the earning recognized by the above-mentioned earning recognizing means based on the distribution rate recognized by the above-mentioned distributing license holder recognizing means.

The contents circulation charge distribution apparatus of the present invention is utilized in the above-mentioned contents circulation charge distribution system and the contents circulation charge distribution method.

Herein, the "earning based on the contents to be delivered" includes at least the earning obtained by the delivery of the contents (delivery earning) or the earning obtained regardless of the delivery of the contents (temporal earning). As the delivery earning, the royalty paid from the contents user and the advertisement rate paid depending on the delivery are included. As the temporal earning, the advertisement rate which is paid one time or at predetermined time interval along with the agreement of the contract for the advertisement delivered together with the contents is included.

In the contents circulation charge distribution apparatus of the present invention, the earning based on the contents to be delivered is recognized by the earning recognizing means.

The earning recognizing means obtains information for specifying the contents occurring the earning and its earning by the input by the manager from the input apparatus or by output from the other terminal through the network. When the earning is constant like the delivery charge regardless of the contents or depending on the contents, this information may only be an information for specifying the contents. In this case, the earning recognizing means recognizes the earning by reading out the earning to be stored in a predetermined storing section. In this case, when the earning is constant regardless of the contents, the earning itself is able to be recognized from the information only specifying the delivery, and the information specifying the contents is used to specify the license holder of the distributing earning right regarding the contents. Further the earning recognizing means may obtain the contents and money itself of the earning as the above-mentioned information. If the earning is not constant like advertisement rate or the like which is different depending on the contract, it is necessary to obtain both information for the contents and its earning.

Further the earning recognizing means may recognize the earning at every delivery or deposit of money or at every time when obtaining the information for the earning such as the payment of the advertisement rate, or may recognize the earning for the delivery or the advertisement contract recognized at a predetermined interval.

The distributing license holder recognizing means recognizes the license holder and the distribution rate of the distributing earning right for the contents earning of which is recognized by the above-mentioned distributing earning right through the input from the input means or by reading out the data stored in the predetermined storage section or from the database in the external terminal apparatus through the network.

The distributing earning calculating means calculates, based on the license holder having the distributing earning right about the contents that is recognized the earning and the distribution rate, the earning of the above-mentioned license holder among the earning recognized by the above-mentioned earning recognizing means. The distributing earning for the license holder of each contents is obtained by multiplying the earning (if there is a plurality, it becomes the sum of them) recognized by the earning recognizing means with the distribution rate of the license holder.

The distributing earning output means outputs the distributing earning of the license holder calculated by the distributing earning calculating means as it is or after processing a predetermined calculation processing such as collecting as per the license holder, wherein the license holder has a plurality of distributing earning right for the plurality of contents. This output is to be printed by a printer connected to the contents circulation charge distribution apparatus and to write to a recording medium driven by the recording medium drive apparatus. Further it may be outputted to the other apparatus through the network. As the other apparatus, for example, a computer to be used by each license holder, a computer for a manager who manages the distributing earning, a transaction server for executing the trading on the account of each license holder or the like are included.

As the network, a public line such as Internet or the like, a network of a leased line such as a VAN or the like, and the network including these both are included. Further, it is not limited to one for a wide area such as Internet but a LAN or the like is also included. Further this network may be wired, wireless or one including both.

In the contents circulation charge distribution apparatus of the present invention, trading means for adding or subtracting money of the trading account of the license holder based on the distributing earning for the license holder calculated by the distributing earning calculating means may be included.

The contents circulation charge distribution apparatus of the present invention includes delivery recognizing means for recognizing the delivery of the mentioned contents from the contents server to the contents client, and the above-mentioned earning recognizing means is able to recognize the delivering earning obtained by the recognizing the delivery by the above-mentioned delivery recognizing means as the above-mentioned earning.

The delivery recognizing means recognizes the delivery by the input from the key board or the like, reading in the predetermined data from outside (a list of contents and delivery numbers delivered predetermined interval, for example), receiving the above information transmitted manually or automatically from the contents client that receives the delivery of the contents, and receiving the above-mentioned information transmitted manually or automatically from the contents server.

The delivery recognizing means may recognize the delivery by obtaining the information indicating the contents and the existence of the delivery at every delivery of the contents, or by obtaining the information of the contents and the delivered numbers in the predetermined time interval.

The above-mentioned delivery earning may able to include at least one of the delivery charge for the above-mentioned contents and the advertisement rate occurring at every delivery of the advertisement being delivered together with the contents.

In the contents circulating charge distribution apparatus of the present invention, the above-mentioned earning recognizing means is able to recognize the temporal earning obtained regardless of the existence of the delivery of the contents as the above-mentioned earning.

The earning recognizing means recognizes the above-mentioned temporal earning by the input from the key board or the like, reading in the predetermined data from outside (a list of contents and earning of the advertisement rate or the like, for example), receiving the above information of the contents and its temporal earning transmitted manually or automatically from the other terminal through the network.

The above-mentioned temporal earning is able to include the advertisement rate to be paid when the agreement is established for the advertisement to be delivered together with the contents, or at every time when it is paid at predetermined interval.

In order to attain the above-mentioned object, the present invention proposes a computer readable contents circulating charge distribution program for equipping a computer with a earning recognizing function for recognizing earning obtained based on delivering contents, a distributing license holder recognizing function for recognizing the license holder and the distribution rate of the distributing earning right preset to the contents recognized the earning by the above-mentioned earning recognizing function, and a distributing earning calculating function for calculating distributing earning to be distributed to the license holder recognized by the above-mentioned distributing license holder recognizing function about the earning recognized by the above-mentioned earning recognizing function based on the distribution rate recognized by the distributing license holder recognizing function.

The contents circulation charge distribution apparatus of the present invention is able to be realized by reading into a computer and executing the contents circulation charge distribution program of the present invention.

Further in order to attain the above-mentioned object, this invention propose a recording medium in which a computer readable contents circulation charge distribution program comprising a earning recognizing function for recognizing the earning obtained base on delivering contents, a distributing license holder recognizing function for recognizing the license holder and the distribution rate of the distributing earning right preset to the contents earning of which are recognized by the earning recognizing function, and a distributing earning calculation function for calculating distributed earning to be distributed to the license holder who is recognized in the above-mentioned the license holder recognizing function are recorded.

As this recording medium, various recording medium including a magnetic recording medium such as a floppy disk and a hard disk, a magneto-optical disk and a CD-ROM or the like are included.

The recording medium on which the contents circulation charge distribution program of the present invention is recorded is possible to realize the contents circulation charge distribution apparatus of this invention by reading the contents circulation charge distributing program into the computer from the recording medium and by executing.

In the contents circulation charge distribution program and the recording medium recorded the contents circulation charge distribution program of the above-mentioned present invention, a delivery recognizing function for recognizing the delivery from the contents server to the contents client about the contents is further equipped to a computer, and it can be set to a recording medium where the contents circulation charge distribution program and the recording medium recorded the program, wherein the above-mentioned earning recognizing function recognizes the earning by delivery obtained by the delivery recognized by the delivery recognizing means as earning.

In this case, the earning by the delivery can be set to include at least one of the charge for the delivery for the contents and an advertisement rate paid at every delivery of the advertisement delivered together with the contents.

In the above-mentioned contents circulation charge distribution program and the recording medium where the above-mentioned contents circulation charge distribution program is recorded of the present invention, the above-mentioned earning recognizing function can recognize temporal earning collected regardless of the delivery of the contents to be as the earning.

In this case, the above-mentioned temporal earning can be set to the advertisement rate to be paid at each establishment of the advertisement delivered together with the contents or at every predetermined interval.

### BRIEF DESCRIPTION OF THE DRAWINGS

Fig. 1 is a schematic diagram showing a business model realized by one embodiment of a contents circulation charge distribution system of the present invention;
Fig. 2 is a block diagram showing a whole configuration of the contents circulation charge distribution system of the present invention;
Fig. 3 is a block diagram showing a schematic configuration of one embodiment of a contents circulation charging distribution apparatus applied in the contents circulation charging distribution system in Fig. 2;
Fig. 4A and Fig. 4B are schematic diagrams showing one example of data stored in the cash flow database 42 of the contents circulation charge distribution apparatus in Fig. 3;
Fig. 5 is a schematic diagram showing one example of the data stored in the license database 43 of the contents circulation charge distribution apparatus in Fig. 3;
Fig. 6 is a schematic diagram showing one example of the data stored in the license holder database 44 of the contents circulation charge distribution apparatus in Fig. 3;
Fig. 7 is a flow chart showing a flow of a contents circulation charge distribution processing by the contents circulation charge distribution apparatus in Fig. 3; and
Fig. 8 is a flow chart showing a flow of an accounting process by the contents circulation charge distribution apparatus in Fig. 3.

### BEST MODE FOR CARRYING OUT THE INVENTION

Here-in-after suitable embodiments of the present invention are explained with reference to the accompanying drawings.

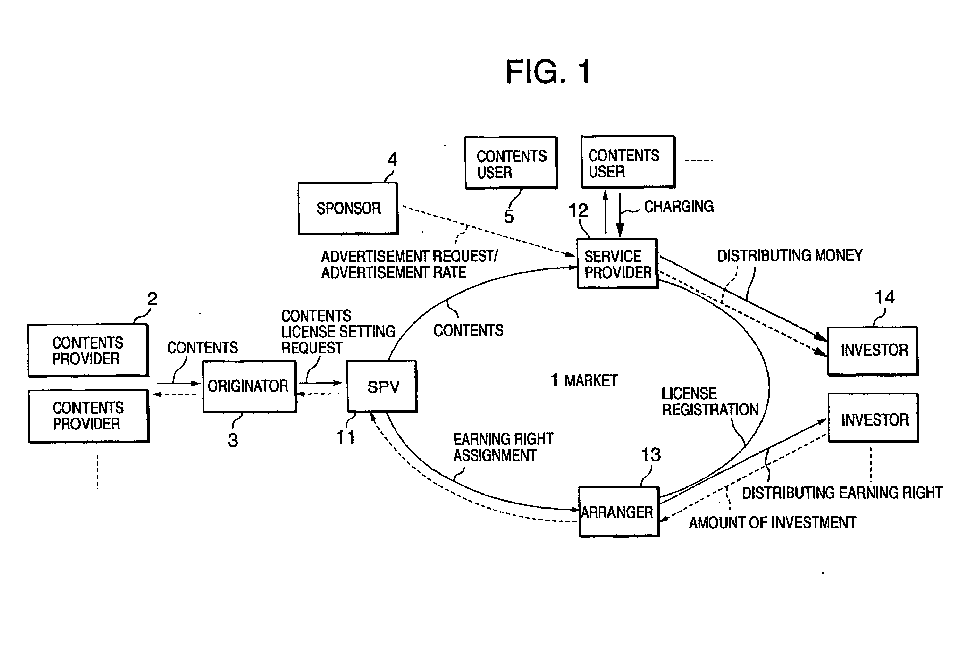

Fig. 1 shows a configuration diagram of one example of a business model configuration realized by one embodiment of the contents circulation charge distribution system of the present invention.

This business model relates to a market 1, wherein the right to receive distribution of earning based on the delivery of contents is circulated and conducts a trading for such license. In this case, a bold-line arrow in Fig. 1 shows a cash flow for the charging requested upon down-loading of the contents by a contents user 5, and a dot-line arrow shows a cash flow for purchase charge for purchasing a distributing earning right by an investor based on the contents. Further a wave-line arrow designates a cash flow for an advertisement rate for the requested advertisement to be delivered together with the contents.

As shown in Fig. 1, in the business model carrying out by this embodiment of the contents circulation charge distribution system, authors who create contents to be circulated by delivery through a network and creators 21, 22, ... who plan/set-up such contents and buy from the author (here-in-after they are called a contents provider 2 as a whole), content users 51, 52 ... who utilize such created contents by down-loading or the like through the network (here-in-after they are called contents a user 5 as a whole), an originator 3, a SPV (Special Purpose Vehicle) 11, an arranger 13, a sponsor 4, a service provider 12, and an investor 14 are joined respectively.

The contents provider 2 proposes the contents capable of collecting earning by delivery. As the contents to be proposed, there are audio data as music, image data such as still images and moving images, and program data for software such as a game. The content provider 2 entrusts its copyright to the originator 3 in order to set distributing earning right for the created contents.

The originator 3 registers entrusted copyright and/or neighboring right (here-in-after it is simply called as copyright) and sets up a plurality of distributing earning right which are the license for receiving distributed earning. This distributing earning right is supplied to the SPV 11 to circulate on the market 1.

The SPV 11 is an agency for supplying the distributing earning right from the originator 3 onto the market 1. Namely the earning right is to be circulated on the market 1 by the SPV 11 like financial commodity, particularly like security.

An arranger 13 is an agency who executes activities such as a selling activity for the distributing earning right, the brokerage business, the proprietary trading or the like relative to the distributing earning right supplied on the market 1 by the SPV 11. By conducting these activities, the arranger 13 is able to obtain royalty revenue based on the service fee from a license holder who asks to entrust the trading for the distributing earning right.

The service provider 12 is a manager who manages the delivery of the contents. The service provider 12 charges to a user (contents user) 5 the amount of money corresponding to usage fee for the contents to a user 5 who receives the delivery of contents by down-loading or streaming. And the service provider 12 distributes dividend corresponding to the distribution rate of possessing distributing earning right to the investor 14 who possesses the distributing earning right, if the contents gains the earning (generates earning).

The contents user 5 accesses to a web site of the service provider 12 through network, obtains desired contents by distribution of contents through down-loading and/or streaming, and utilizes. And, the amount of money corresponding to the obtained contents instead of obtaining the contents is charged. Further, a file exchange and/or transfer is conducted among the contents users 5. Actually, the contents users 5 are able to exchange files, and to transfer the files.

The sponsor 4 places the advertisement to the desired contents. The placement of the advertisement is requested to the service provider 12. When the advertisement is placed on the desired contents, the advertisement rate for placing the advertisement to the contents is collected by the service provider 12. And when the advertisement of the sponsor 4 together with the desired contents is delivered, the advertisement is placed on the delivered contents.

The investor 14 purchases (invests) the tradable distributing earning right by way of the arranger 13. Further purchased distributing earning right is offered to sell. The distributing earning right circulating on the market 1 is clarified the property as the commodity, so that the investor 14 can easily judges the quality of the earning right. Further the distributing earning right can be an object of the asset management similar to the other financial commodity. Accordingly, options of so-called port-folio are increased for the investor 14 when managing funds by combining various financial commodities to split risks.

Next, one embodiment of the contents circulation charge distribution system of the present invention for realizing the above-described business model is explained.

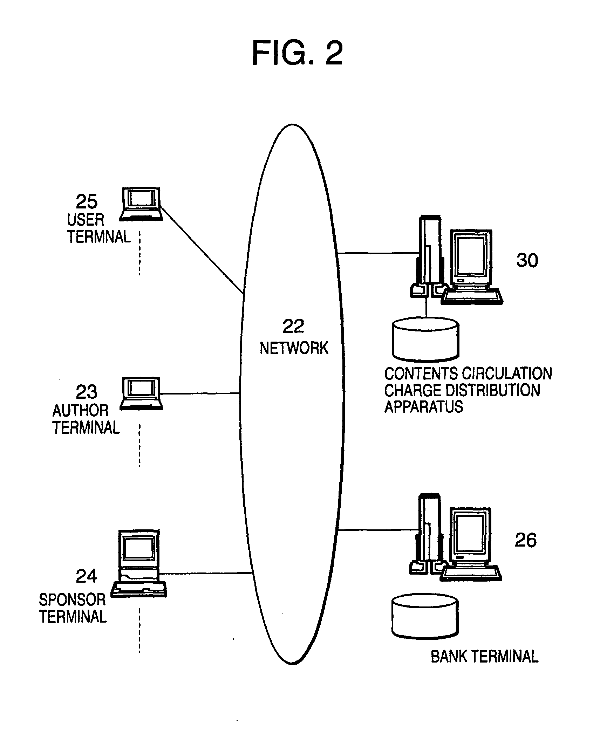

Fig. 2 shows a schematic diagram showing a whole construction of the contents circulation charge distribution system of the present invention.

As shown in Fig. 2, the contents circulation charge distribution system of this embodiment comprises: a contents server for delivering contents; a contents client (user terminal) 25 for receiving the delivery of the contents from the contents server; and a contents circulation charge distribution apparatus 30. According to the present embodiment, the contents circulation charge distribution apparatus 30 also serves as the contents server.

Further in this embodiment, the contents circulation charge distribution system further comprises: an author terminal 23; a sponsor terminal 24; and a bank terminal 26.

The contents circulation charge distribution apparatus 30 is set to be mutually connected to any of the author terminal 23, the sponsor terminal 24, the user terminal 25, and the bank terminal 26 through the network.

The author terminal 23 is operated by a contents author or the contents creator who creates the contents to be delivered. Various contents data such as data of music and picture, program or the like are offered by the contents provider through the author terminal 23, and their copyrights are entrusted.

The contents circulation charge distribution apparatus 30 is operated by an agency/manager (here-in-after simply called as a manager). The copyrights are entrusted from the contents provider 2 to the manager through the contents circulation charge distribution apparatus 30. And after registering copyright and/or neighboring right (here-in-after it is simply called as copyright) to the contents copyrights of which are entrusted, a plurality of distributing earning right, which are the licenses for receiving distributed earning, are set regarding the contents. Then, selling activity for the distributing earning right, the brokerage business, the proprietary trading or the like or the like are conducted among investors 14 by the investor terminal through the network. In addition, the earning by delivery of the contents to the contents client 25 are recognized by the contents circulation charge distribution apparatus 30, and earning for each license holder is calculated based on the data related to the license holder who has a right to receive the earning by the contents and the distribution rate.

The sponsor terminal 24 is operated by the sponsor 4. By operating the sponsor terminal 24, the sponsor 4 decides the contents on which the advertisement is placed by communication with the contents circulation charge distribution apparatus 39 through the sponsor terminal 24, and presets a way of payment for the advertisement rate (pay the amount depending on the number of the delivery, pay a predetermined amount upon establishment of the contract, pay at each term such as per month, or the like), and the advertisement rate.

The user terminal 25 is operated by the user 5. By operating the user terminal 25, the user 5 is able to obtain desired contents from the contents circulation charge distribution apparatus 30 by down-loading, and to utilize for listening or the like. The user 5 sets an account or the like for payment of the charge by communicating with the contents circulation charge distribution apparatus 30 through the user terminal 25.

The bank terminal 26 is a terminal of a bank where the account of the contents provider 2, the sponsor 4, the contents user 5, the investor 14 or the like are provided. This bank terminal 26 is connected to the contents circulation charge distribution apparatus 30 through the network, and is able to conduct the trading processes such as earning distribution, charging, deposit of service fee, debit at each account from the contents circulation charge distribution apparatus 30.

The author terminal 23, the sponsor terminal 24, the user terminal 25 and the bank terminal 26 are set to be proper terminals, but are possible to use general purpose computers such as personal computers.

The network 22 is a network such as the Internet, and may use public telephone line, and may be a leased line such as a network service of a CATV (Cable Television) or a mobile phone. Further a Peer to Peer (P to P) method which shares information by directly connecting a plurality of individuals.

Next, the contents circulation charge distribution apparatus 30 is further explained in detail.

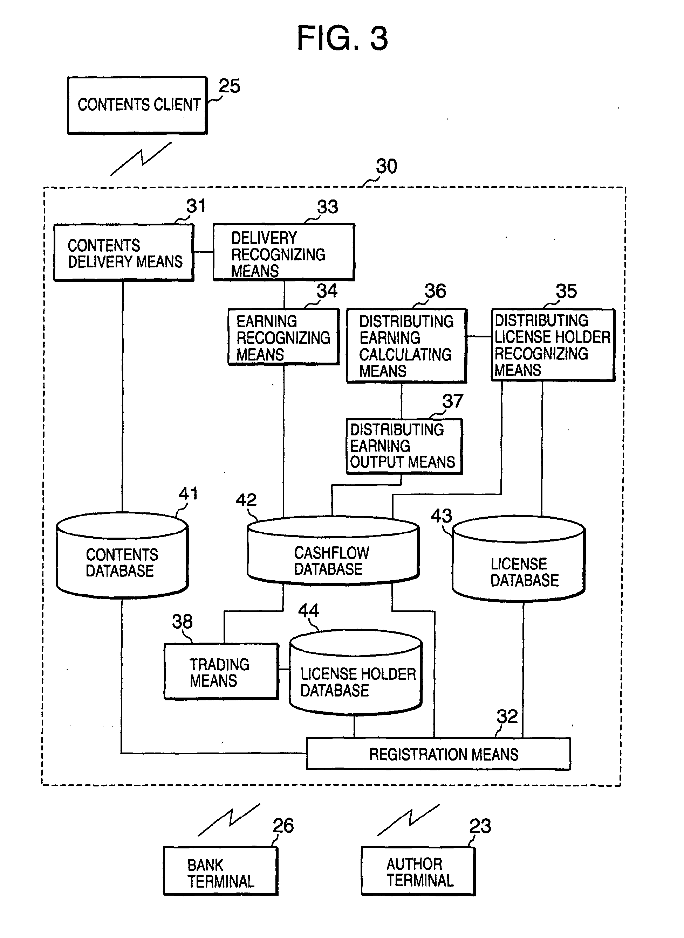

Fig. 3 is a schematic configuration showing the contents circulation charge distribution apparatus 30.

As shown in Fig. 3, the contents circulation charge distribution apparatus 30 comprises: a contents database 41 for storing contents delivered to a contents client 25; and a contents delivery means 31 for delivering the contents data stored in the contents database 41 in response to a request from the contents client 25 through the network, and thereby functions as a contents server.

Further the contents circulation charge distribution apparatus 30 of this embodiment comprises: a cash flow database 42, a license database 43, and a license holder database 44.

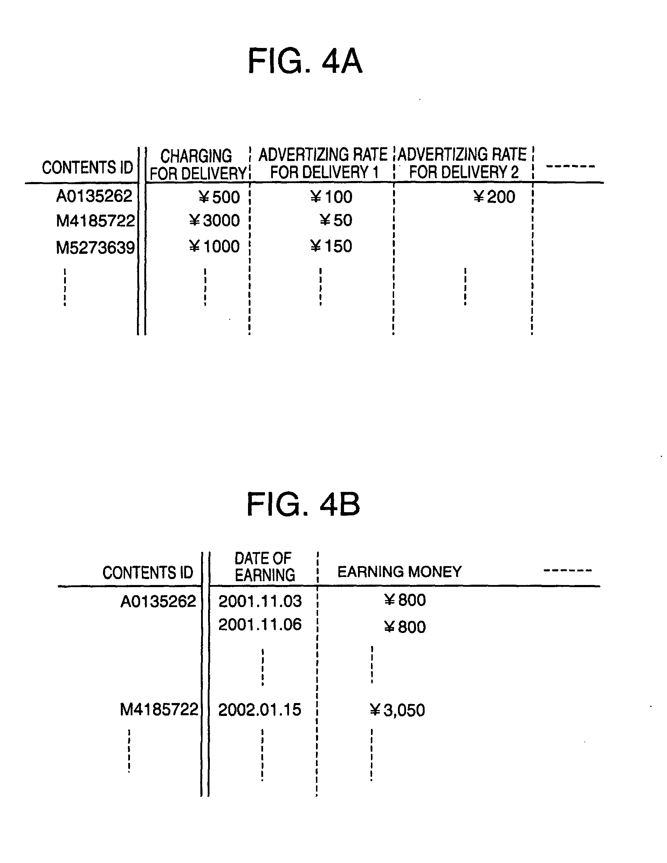

Fig. 4A and Fig. 4B are schematic charts for showing one example of the data to be stored in the cash flow database 42.

As shown in Fig. 4A and Fig. 4B, an earning preset table (Fig. 4A) and an earning collecting table (Fig. 4B) are stored in the cash flow database 42.

The earning preset table stores money of the charge for delivery charged to a user of the delivered contents when the contents are delivered and the money for the advertisement rate for the delivery charged to a sponsor of the advertisement included in each contents when the contents are delivered corresponding to ID of each contents. Accordingly, when the contents are delivered to the contents client 25 once, there is a collection of the money for charge for the delivery and the money for the advertisement rate for the delivery.

An earning collection table stores an earning collected by the delivery, the earning collected regardless of the delivery and the date (year, month, day) for collecting the earning. The earning collected regardless of the delivery is stored its data, in the present embodiment, by inputting by manager through an input means such as a key-board or the like.

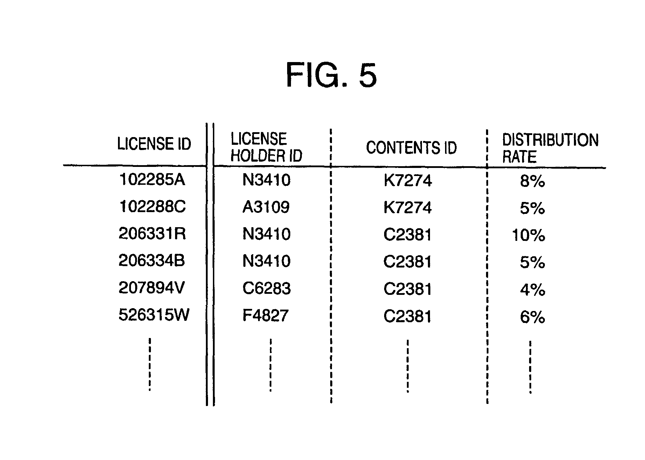

Fig. 5 is a schematic chart for showing one example of the data to be stored in the license database 43.

As shown in Fig. 5, the license database 43 stores an ID (license holder ID) of a license holder who is the investor 14 purchasing the distributing earning right for the ID and having the distributing earning right, an ID of the contents the distributing earning right of which is owned by the license holder, the contents ID and its distribution rate corresponding to the license ID of the distributing earning right preset to respective delivering contents.

For example, distributing earning right for the license ID of 102285A in Fig. 5 is retained by the investor 14 having a license holder ID of N3410, and is a right to be distributed by 8% related to the earning of the contents having a contents ID of K7274.

Accordingly, when referring to the data stored in the license database 43, it is made possible to know which investor (license holder) 14 retains the distributing earning right and how the distribution rate is.

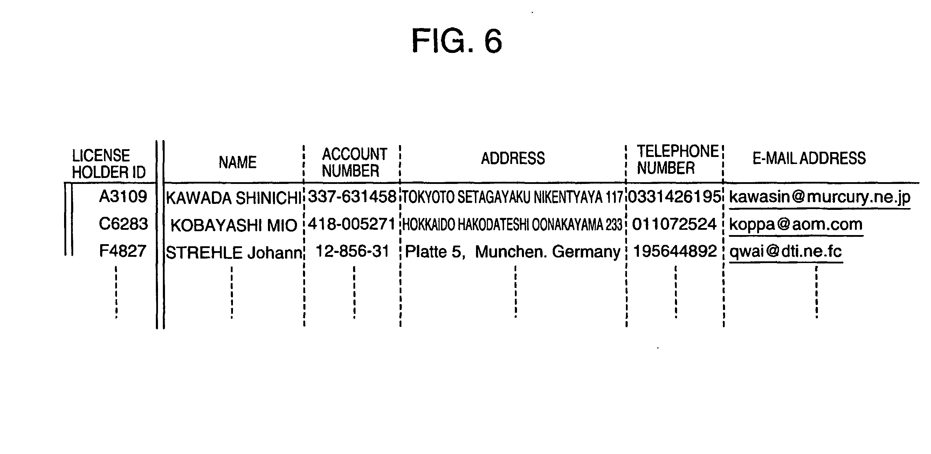

Fig. 6 is a schematic diagram showing one example of data stored in the license holder database 44.

As shown in Fig. 6, the license holder information for the license holder of its ID corresponding to the license holder ID is stored in the license holder database 44. As for the license holder information, name, contact address (address, phone number, e-mail address or the like), account number or the like of the investor 14 of corresponding license holder ID are recorded.

According to the distributing earning right, the distribution of the earning obtained by the contents is distributed to each license holder by deposit to the account stored in the license holder database 44.

In addition, the contents circulation charge distributing apparatus 30 comprises registration/updating means 32, delivery recognizing means 33, earning recognizing means 34, distributing license holder recognizing means 35, distributing earning calculating means 36, distributing earning output means, and trading means 38.

The registration/updating means 32 updates the earning preset table of the cash flow database, the data of the earning collecting table, and the data of the license holder database 44 based on the contents to which the advertisement is added, method for paying the advertisement rate, the advertisement rate or the like.

Further it presets an account for paying the charge by a new user who is recognized by communication with the user terminal 25, a license holder ID for a new investor 14 who is recognized by communication with a investor terminal, an account for paying distributing earning, new contents recognized by communication with a contents provider terminal and the ID of the distributing earning right preset to the contents, and updates the license database 43 and the license holder database 44.

The delivery recognizing means 33 recognizes that the data of the contents stored in the contents database 41 is delivered from the contents server to the contents client 25. This contents recognizing means 33 recognizes, in this embodiment, by receiving its contents ID at every delivery of the contents data from the contents delivery means 31. And in the earning preset table of the cash flow database 42, the money for the delivering charge corresponding to the contents ID recognized by the delivery recognizing means 33 and the money for the advertisement rate are collected, then such collected money and the date when the delivery is recognized are written in the earning collecting table as the earning data corresponding to this contents.

The earning recognizing means 34 recognizes the earning for each contents out of the earning collecting table of the cash flow database 42. The delivering earning written automatically in the earning collecting table by the delivery recognizing means 33 and the temporal earning manually written through the input means are included in this earning.

By referring the earning preset table of the cash flow database 42, the earning obtained by delivery about the contents the delivery of which is recognized by the delivery recognizing means 33 are recognized. And the data is updated by adding the earning obtained by the delivery to the corresponding money of the earning collecting table.

The distributing license holder recognizing means 35 recognizes the license holder and the distribution rate of the distribution earning right being preset to the contents the earning of which is recognized by the earning recognizing means 34. The license holder and its distribution rate are recognized from the license database 43. Namely, the distributing license holder recognizing means 35 searches the license database 43 by every license. And, it recognizes the investor 14 (license holder) having the license corresponding to each license, and further recognizes the contents ID (namely, ID of the contents to which the corresponding license is set) corresponding to the license and its distribution rate.

In the present embodiment, the recognition of the license holder and its distribution rate by the distributing license holder recognizing means 35 is executed at a predetermined date and term such as at every end of the month, for example.

The distributing earning calculating means 36 calculates the distributing earning for each of the distributing earning right based on the license holder, the contents ID and the distribution rate of each license recognized by the distributing license holder recognizing means 35. Namely, at every license, the earning of the contents which the license covers the earning distribution is searched from the earning collecting database. And the distributing earning are set by multiplying the distribution rate set to the license to the earning.

The distributing earning output means 37 outputs the earning of the each license holder calculated by the distributing earning calculating means 36. In the present embodiment, the earning calculated at every distributing earning by the distributing earning calculating means 36 are collected at each license holder. And its collection result is output to the trading means 38.

The trading means 38 recognizes each license holder and its distributing earning (dividend) output from the distributing earning output means 37, recognizes the mail address as a contact address of each license holder by referring the license holder database 44, and transmits a mail for informing its earning to the license holder. Further, it recognizes the trading account of each license holder and executes the trading process for increasing/decreasing the money of the trading account based on the earning of the license holder.

Thereby, the license holder is informed the distributing earning obtained during the term collectively at predetermined term through the mail and the distributing earning are deposited to the trading account.

Further, the trading means 38 recognizes the trading of the earning distributing license from the data stored in the license database 43 and the data stored in the license holder database 44, when the license database 43 and the license holder database 44 are updated by the registration/updating means 32, and executes the trading of checking off the money related to the purchase money of the earning distribution license and the money related to the commission of the manager from the account of the investor 14 who purchases the earning distribution license. Further, to the account of the investor 14 who assigned the earning distribution license, the trading for depositing the money corresponding to the trading money of the earning distribution license to the account of the investor 14 is executed.

The contents circulation charge distribution apparatus 30 specifically comprises a computer to be conventionally used as a server. Namely, it comprises a control section including a CPU (Central Processing Unit), a ROM and a RAM, a data transmission/reception section for transmitting/receiving data through a network, a communication control apparatus for controlling the data transmission/reception section, a HDD as a recording medium for storing various programs and its drive apparatus, an input apparatus such as a key board, and other various apparatus.

The control section is equipped with a multi-sled function, and can correspond simultaneously and individually to accesses from a plurality of various terminals (the author terminal 23, the sponsor terminal 24, the user terminal 25 and the bank terminal 26) connected through the network.

In addition, by writing the contents circulation charge distribution program stored in the HDD in a memory, interpreting and executing by the CPU and controlling above-mentioned various apparatus, the computer is to be equipped with functions of the distribution recognizing means 33, the earning recognizing means 34, the distributing license holder recognizing means 35, the distributing earning calculating means 36, the distributing earning output means 37, the trading means 38 and the registration/updating means 32. The contents database 41, the cash flow database 42, the license database 43 and the license holder database 44 are retained in the HDD.

Next, the flow of the processes at respective terminals constituting the contents circulation charge distribution system, namely the operation of the contents circulation charge distribution system is explained by focusing on the contents circulation charge distribution apparatus 30.

The various processes of the contents circulation charge distribution system start with a request for the delivery of the contents by a user.

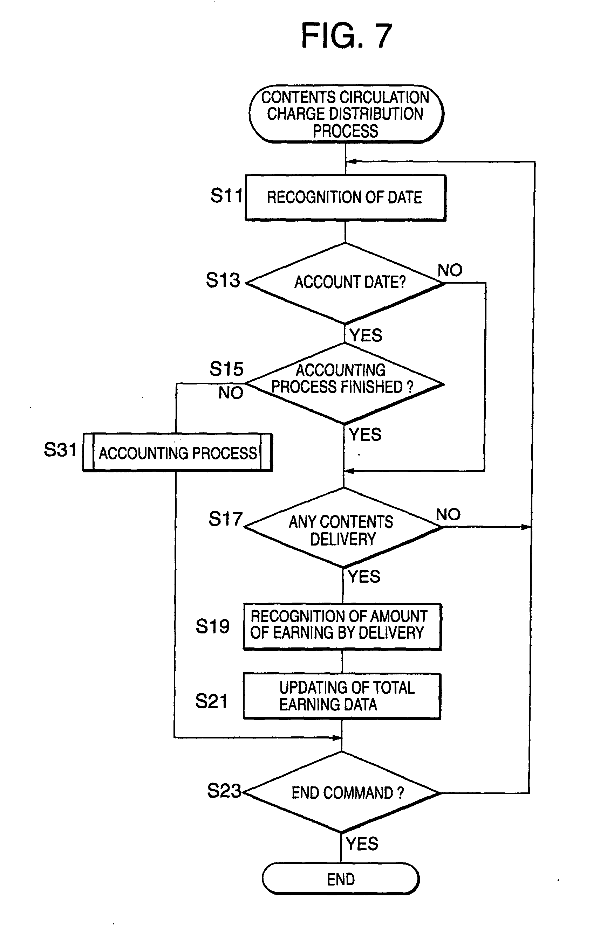

Fig. 7 is a flow chart for showing a flow of contents circulation charge distribution processes by the contents circulation charge distribution apparatus 30.

As shown in Fig. 7, the contents circulation charge distribution system 30 always recognizes the date (step 11), and checks if the day is a payment day. If the day is the payment day, (step 13; YES) then checks if the payment processing is finished (step 15). If the day is not a payment day (step 13 ; NO), and if the day is a payment day but the payment processing is finished (step 15 ; YES), then the status of the delivery of the contents is watched (step 17). The delivery of the contents is recognized by the delivery recognizing means 33.

And if there is the delivery of contents (step 17; YES), the money of the earning by delivery is recognized by adding the money of the delivery charge for the ID of the contents recognized by the delivery recognizing means 33 with the money for the delivery advertisement rate in the earning setting table of the cash flow database (step 19). And the this total money (money for the earning by delivery) and the recognized date for the delivery by the delivery recognizing means 33 are written into the earning collecting table as the earning data corresponding to the ID of this contents (step 21). After the earning data are written, it is checked if the end command is input as to the contents circulation charge distribution processing (step 23), and if there is no end command (step 23 ; NO), returns to the step 11, and recognizes the date again. If there is the end command (step 23 ; YES), the contents circulation charge distribution processing ends.

If the day is the payment day, and the payment processing is not finished (step 15 ; NO), the payment processing is executed (step 31).

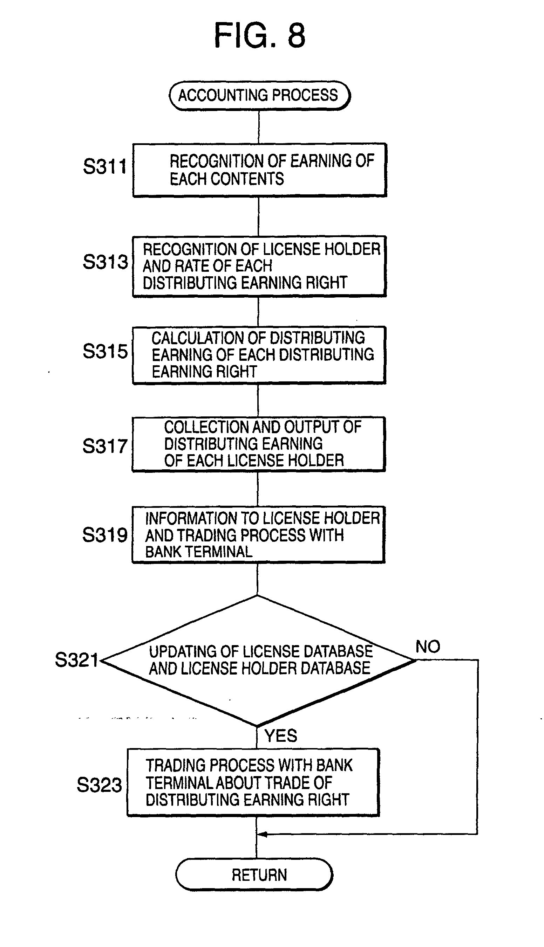

Fig. 8 is a flowchart for showing a flow of the payment processing.

As shown in Fig. 8, in the payment processing, the earning of each contents is recognized from the earning collecting table of the cash flow database 42 by the earning recognizing means 34 (step 311). These earning includes the delivery earning written in the earning collecting table automatically by the delivery recognizing means 33 and the temporal earning manually written through the input means. The earning recognizing means 34 adds the earning by delivery after previous payment day and the temporal earning and recognizes as the earning of each contents by referring the earning preset table of the cash flow database 42.

When the earning of each contents are recognized, then, the license holder of the distributing earning right preset to each contents and the distribution rate are recognized by the distributing license holder recognizing means 35 (step 313).

And the distributing earning of each distributing earning right are calculated base on the earning of each contents, the license holder of the distributing earning right preset to each contents and the distribution rate by the distributing earning calculating means 36 (step 315).

Then, the distributed earning collected to each license holder are output to the trading means 38 by the distributing earning output means 37 (step 317).

When the distributed output is issued, the trading means 38 recognizes the mail address as the contact address of each license holder with reference to the license holder database 44, and transmits a mail to each license holder to inform its distributed earning. Further, the trading account of each license holder is recognized from the license holder database 44, and trading processing for adding or subtracting the money in/from the trading account is executed based on the earning of the license holder (step 319). Further the trading means 38 checks if the license database 43 and the license holder database 44 are updated by the registration/updating means 32 (step 321), and if they are updated (step 321; YES), the trading of the earning distributing right is recognized from the data stored in the license database 43 and the data stored in the license holder database 44, a trading for checking off the money for the purchasing price of the earning distributing right and the money for the commission of the manager from the account of the investor 14 who purchases the earning distributing right through the communication with the bank terminal 26. Further a trading for depositing the money of the selling price of the earning distributing right to the account of the investor 14 who assigned the earning distributing right is executed to the account of the investor 14 (step 323).

If the license database 43 and the license holder database 44 are not updated by the registration/updating means 32 (step 321 ; NO), it returns to a main routine by ending the payment processing after finishing the trading processing to the bank terminal 26 about the trading of the distributing earning right (after the step 323).

Thus the contents circulation charge distribution system of the present embodiment recognizes the charge paid by the contents user 5 for the delivery of the contents and the earning obtained as the advertisement rate paid by the sponsor from the information for the delivery of the contents. Further the advertisement rate which is the earning obtained regardless of the delivery is recognized based on an information for applying advertisement delivery from the sponsor terminal by the sponsor through the network.

And the distributing earning right is set to each of contents, the license holder and the distributing right are recorded in the database, the distributing earning are acquired by calculation, and the bank trade is executed.

Further in the contents circulation charge distributing system of the present embodiment, the earning based on the contents are recognized at the contents circulation charge distributing apparatus 30 by the information from various terminal apparatus connected through the network. And the distributed earning to be distributed to each license holder based on the earning are obtained automatically, the trading to the bank account for the license holder is executed, and the earning are distributed.

In the contents circulation charge distributing system, the distributing earning right is preset and sold, and the obtained earning is paid to the contents provider 2. Accordingly, the load and the risk of the contents provider 2 are very small, and it becomes easy to circulate the contents for small-sized creator such as minor label, thereby circulation of the various contents are secured.

Further about the earning based on the contents, it is possible to secure the contents by setting the right to receive its distribution, so that the author of a major label, major studio or a major soft-house can improve the return on total assets and the return on equity. Further it is possible to suppress in minimum its risk of a newly created contents.

Further when the investor 14 purchases the distributing earning right and becomes a license holder of the distributing earning right, the data are stored in the license database 43 and the license holder database 44 of the distributing earning right, and when the contents obtains the earning, then the distributed earning are distributed. In addition, it is possible to obtain the earning by trading of the distributing earning right.

In the contents circulation charge distribution system of the present embodiment handles a new trading object such as distributing earning right the earning of the contents and circulates, so that the revitalization of whole contents field can be increased. Further many persons can experience a position of an investor as a license holder of the distributing earning right about the distributing contents, so that a position of the contents provider 2 is understood, a moral relating to the copyright protection is brought and an illegal copy is avoided.

Namely, a contents circulation charge distribution system, a contents circulation charge distribution method, a contents circulation charge distribution apparatus 30, a contents circulation charge distribution program and a recording medium for recording such contents circulation charge distribution program of the present invention are not limited to the above-described embodiments and are able to be variously modified without departing from the purpose of the present invention.

For example, in the above-described embodiments, the delivery recognizing means 33 r4ecognizes the delivery of the contents by the information from the contents delivering means 31 that is a contents delivering side in the delivery of the contents, but may be able to recognize from the information transmitted from the contents client 25 that is contents delivered side. For example, when the contents client 25 transmits a request for downloading of the contents, then simultaneously, an ID for the contents is transmitted to the contents circulation charge distribution apparatus 30, and thereby the delivery recognizing means 33 may recognize the delivery of the contents.

In the above-mentioned embodiment, the earning recognizing means 34 recognizes the delivering charge and the delivering advertisement rate of the delivered contents with reference to the earning setting table of the cash flow database 42, and the earning by the delivery are obtained by adding them, but, when the delivering charge and the delivering advertisement rate are constant regardless of the contents, the earning preset table can be omitted.

In the above-mentioned embodiment, the earning generated based on the contracts for the delivery of contents, advertisement or the like are recorded in the earning collecting table of the cash flow database 42 and the earning are distributed to the license holder of the distributing earning right at every predetermined payment day, but it is not limited to this, and each database may be rewritten, the payment processing may be executed and the trading may be executed at every time when the earning are generated and a new cash flow such as a purchase trading of the earning distributing right in addition to this. In this case, when the payment processing is executed at every time when generating the earning and executing the purchase trading, it is not necessary to record the earning of each license holder, so that the earning collecting table of the cash flow database 42 is not necessary.

In the above-mentioned embodiment, the distribution of the earning by delivery is made right about the contents such as music data, image data, program data for a game, program data for software, movie and play, but the contents circulation charge distribution apparatus 30 of the present invention can preset the right to receive the distribution for the earning, circulate manage the earning and distribute about the creditable things such as various merchandise and service, project (planning), real estate, famous person himself in addition to the contents.

In this case, the earning may be recognized by the input from the input means, but if the purchase and the contract of the merchandise and service are executed through the network, instead of information for the delivery in the above-mentioned embodiment, such information is recognized from the terminal that executes the purchase and the contract, and based on this information, the earning may be recognized. Thereby, as similar to the above-mentioned embodiment, it becomes possible to execute the earning distribution processing making use of the fact that the delivery of the contents and the preset of the advertisement can be automatically recognized.

The present invention distributes the earning obtained by the delivery of the contents by utilizing the fact that the delivery of the contents and the setting of the advertisement are able to be automatically recognized, it is needless to say that it is possible to store to the contents database 41 the contents which are not preset the distributed earning by the delivery.

In the above-mentioned embodiment, each license database 43 and the license holder database 44 are automatically updated by the registration/updating means 32 based on the communication to respective connected terminal in the contents circulation charge distributing apparatus 30, these license database 43 and the license holder database 44 can be updated by the input through the input means by the manager.

In the above-mentioned embodiment, the contents circulation charge distributing apparatus 30 is operated by the manager who takes on the delivery of the contents, and services for the SPV11 and the arranger, and is used for the services of the SPV11 and the arranger, but it is possible to be the one that has only function to recognize the earning obtained by the delivery of the contents, calculate the distributed earning to be distributed to the license holder and output the same.

In the above-mentioned embodiment, the manager takes on the service of the SPV 11, and the contents to be delivered are stored in the contents server by the contents provider 2, but it is possible to store by the SPV 11.

In the above-mentioned embodiment, the contents circulation charge distributing apparatus 30 reads in the contents circulation charge distribution program from the recording medium (hard disk), but a way for supplying the program is not limited to this, and may be supplied from other server through the network. In addition, the contents database 41, the cash flow database 42, the license database 43 and the license holder database 44 may be user one provided in other server. Further in case when these databases are provided in the contents circulation charge distribution apparatus 30, some among them may be set in different recording medium or set to single recording medium. Further, it may be comprised of a removable large-capacity recording medium such as a DVD (Digital Versatile Disc).

According to the present invention, a suitable circulation of the contents is secured with small load and risk at the contents delivery by utilizing the network, and the circulation for the various contents can be secured. Accordingly, the contents by a provider of small entity such as minor label or the like can be easily circulated and are able to utilize effectively.

### APPLICATION FIELD IN THE INDUSTRY

In the contents circulation charge distribution system, the contents circulation charge distribution method, the contents circulation charge distribution apparatus, the contents circulation charge distribution program, and the recording medium in which the contents circulation charge distribution program is recorded, it is possible to adopt to an electronic trading of the contents circulating on a network, for example.

### EXPLANATION OF CODES

1 ..... Market, 2 ...... Contents provider 3 ...... Originator, 4 Sponsor, 5, 51 ...... Contents user, 11 ...... SPV, 12 ...... Service provider, 13 ...... Arranger, 14 ...... Investor, 22 ...... Network, 23 ...... Author terminal, 24 ...... Sponsor terminal, 25 ...... User terminal (Contents Client), 26 ...... Bank terminal, 30 ...... Contents circulation charge distribution system, 31 ...... Contents delivery means, 32 ...... registration /updating means, 33 Delivery recognition means, 34 ...... Earning recognition means, 35 ......Distribution license holder recognition means, 36 ...... Distribution earning calculation means, 37 distributing earning output means, 38 Trading means, 41 ...... Contents database, 42 Cash flow database, 43 License database, 44 ...... License holder database.

## Claims

1. A contents circulation charge distribution apparatus comprising:
a contents server for delivering contents; and
a contents client for receiving delivery of said contents from said contents server, wherein said contents circulation charge distribution apparatus is **characterized by**:
recognizing delivery of contents from said contents server to said contents client;
recognizing earning by said recognized said delivery;
recognizing license holder and distribution rate for earning license assignment set to the contents which is recognized the earning; and
calculating distributing earning to be distributed to each license holder among said recognized earning based on said recognized license holder and distribution rate.

2. A contents circulation charge distribution method **characterized by** comprising:
recognizing earning based on contents delivered to a contents client from a contents server to be connected to a network; and
calculating distributing earning of each license holder among said recognized earning based on license holder who has right to receive earning based on said contents and data related to a distribution rate.

3. A contents circulation charge distribution apparatus **characterized by** comprising:
earning recognizing means for recognizing earning based on contents to be delivered;
distributing license holder recognizing means for recognizing license holder and distribution rate of the distributing earning license set to said contents on which the earning are recognized by said earning recognizing means; and
distributing earning calculation means for calculating distributing earning to be distributed to said license holder recognized by said distributing license holder recognizing means regarding recognized earning by said earning recognizing means based on said distribution rate recognized by said distributing license holder recognizing means.

4. The contents circulation charge distribution apparatus as cited in claim 3, **characterized by** further comprising:
delivery recognizing means for recognizing delivery of said contents form a contents server to a contents client, wherein
said earning recognizing means recognizes delivery earning obtained by delivery recognized by said delivery recognizing means as said earning.

5. The contents circulation charge distribution apparatus as cited in claim 4, **characterized in** which
said delivery earning include at least one among delivery charge for the contents, advertisement rate requested at each delivery of advertisement delivered together with said contents.

6. The contents circulation charge distribution apparatus as cited in claim 3, **characterized in** which
said earning recognition means recognizes temporal earning obtained regardless of delivery of said contents as said earning.

7. The contents circulation charge distribution apparatus as cited in claim 5, **characterized in** which
said temporal earning are advertisement rate paid upon establishment of contracts for the advertisement delivered together with said contents or at every predetermined intervals.

8. A contents circulation charge distribution program readable by computer for equipping functions comprising:
earning recognizing function for recognizing earning based on contents to be delivered;
distributing license holder recognizing function for recognizing license holder and distribution rate of the distributing earning license set to said contents on which the earning are recognized by said earning recognizing function; and
distributing earning calculation function for calculating distributing earning to be delivered to said license holder recognized by said distributing license holder recognized function regarding recognized earning by said earning recognized function based on said distribution rate recognized by said distributing license holder recognizing function.

9. A recording medium wherein the contents circulation charge distribution program as cited in claim 7 is recorded.
